# NEUE EUROPÄISCHE PATENTSCHRIFT

(11) **EP 1 293 280 B3**
(45) Veröffentlichungstag dieser Patentschrift: **02.09.2009**
(45) Hinweis auf die Patenterteilung: 12.10.2005
(21) Anmeldenummer: 02018341.4
(22) Anmeldetag: 14.08.2002
(51) Int. Cl.: B23C 3/05, B23C 5/24

(54) **Spanabhebendes Werkzeug mit Wendeschneidplatte**
Chip-cutting tool with indexable cutting insert
Outil travaillant par enlèvement de copeaux avec plaquette de coupe indexable

(30) Priorität: 12.09.2001 DE 10144923
(43) Veröffentlichungstag der Anmeldung: 19.03.2003
(73) Patentinhaber: Gühring, Jörg, Dr., 72458 Albstadt (DE)
(72) Erfinder: Schlagenhauf, Uwe, 72479 Strassberg (DE)
(74) Vertreter: Winter, Brandl, Fürniss, Hübner Röss, Kaiser, Polte Partnerschaft Patent- und Rechtsanwaltskanzlei

(56) Entgegenhaltungen:
- FR-A- 1 415 885
- US-A- 1 554 669
- US-A- 3 058 198
- US-A- 3 332 130

## Beschreibung

Die Erfindung betrifft ein Werkzeug, insbesondere ein rundlaufendes Werkzeug für die Bearbeitung, insbesondere für die spanabhebende Bearbeitung von Werkstücken, vorzugsweise ein spanabhebendes Werkzeug mit einer Wendeschneidplatte, gemäß dem Oberbegriff des Patentanspruchs 1, wie es aus der US 3 058 198 bekannt ist.

Mit Schneideinsätzen, wie z.B. Wendeschneidplatten, bestückte Werkzeuge werden i. d. R. dann eingesetzt, wenn es darum geht, Funktionsflächen mit größtmöglicher Präzision zu bearbeiten und gleichzeitig die Einsatzdauer des Werkzeugs möglich hoch zu halten, um die Wirtschaftlichkeit des verhältnismäßig teuren Werkzeugs auf einen möglichst hohen Niveau zu halten. Es sind verschiedene Ansätze bekannt, derartige Werkzeuge zu gestalten.

Aus den Dokumenten DE 3242765 A1, DE 19800440 A1, DE 19725219 A1, EP 0385709 A1, DE 19635490 A1 und DE 4300289 A1 sind Werkzeuge, wie z.B. Fräs-oder Messerköpfe bekannt geworden, bei denen der Schneidansatz, wie z.B. die Wendeschneidplatte auf einer Werkzeugkassette fest montiert ist. Die Wendeschneidplatte ist mittels einer Befestigungsschraube ortsfest und unverrückbar an der Kassette befestigt. Die Kassette sitzt einstellbar an einem Trägerkörper. Diese Ausgestaltung ermöglicht zwar eine Feineinstellung der Schneide der Wendeschneidplatte, auch wenn Wendeschneidplatten nach DIN verwendet werden. Der Nachteil dieser bekannten Anordnung liegt jedoch darin, dass sehr viel Bauraum benötigt wird, sodass das Einsatzgebiet dieser Werkzeuge verhältnismäßig beschränkt bleibt. Vergleichbare Werkzeuganordnungen, die mit kassettenartigen Schneidenträgern arbeiten, sind Gegenstand der Dokumente WO 96/39271 und DE 3801394 A1.

Aus dem Dokument WO 97/34722 ist eine Schneidanordnung bekannt, bei der eine Wendeschneidplatte in einer besonders gestalteten Ausnehmung im Trägerkörper aufgenommen ist. Die Wendeschneidplatte wird direkt mittels einer zentrisch angeordneten Befestigungsschraube gegen den Trägerkörper gespannt, wobei eine Keilgetriebeanordnung vorgesehen ist, um die Schneide in radialer Richtung zu verstellen. Der Nachteil dieser Anordnung liegt darin, dass der Trägerkörper nur für eine ganz bestimmte Plattengeometrie verwendbar ist und dass die Verstellmöglichkeiten beschränkt bleiben. Dadurch, dass eine zentrale Befestigungsschraube für die Wendeschneidplatte vorgesehen sein muss, können im Übrigen nur Wendeschneidplatten ab einer gewissen Mindestgröße eingesetzt werden.

Es ist auch bereits bekannt, Wendeschneidplatten mittels sog. MikroEinstellvorrichtungen am Trägerkörper zu befestigen und nach der Justierung durch geeignete Klemmeinrichtungen zu fixieren. Dieser Stand der Technik ist in den Dokumenten DE 2754499 A1, DE 2757273 A1, EP 0154021 B1 und EP 0126432 B1 beschrieben. Der Nachteil dieser Anordnungen liegt darin, dass erneut das Werkzeug nur für einen bestimmten Typ von Wendeschneidplatten eingesetzt werden kann und dass darüber hinaus die Spannvorrichtungen relativ komplex, d.h. mit vielen relativ zueinander beweglichen Teilen ausgebildet werden müssen, wodurch das Werkzeug teuer wird. Im Übrigen leidet auch die Stabilität des Werkzeugs unter diesen aufwendigen Konstruktionen.

Aus dem Dokument EP 0381924 A2 ist ein Werkzeug bekannt, bei dem zur Fixierung des Schneidansatzes eine Spannpratze verwendet wird, die mittels einer Spannschraube gegen den Trägerkörper gepresst wird und dabei mit einem auskragenden Endabschnitt gegen den Schneidansatz drückt, der dadurch flächig gegen eine Bodenfläche einer Ausnehmung im Trägerkörper gespannt wird. Der Nachteil dieser Anordnung besteht darin, dass eine Feinjustierung des Schneidansatzes nicht möglich ist.

Wie Eingang bereits erwähnt, werden gattungsgemäße Werkzeuge dann eingesetzt, wenn Funktionsflächen mit hoher Güte und engen Toleranzanforderungen wirtschaftlich bearbeitet werden sollen. Um die Einstellzeiten des Werkzeugs bzw. die Umrüstzeit möglichst kurz zu halten, wird an ein derartiges Werkzeug die Anforderung gestellt, innerhalb kürzester Zeit eine exakte Einstellung der Funktionsschneide des Schneidansatzes relativ zum Bezugssystem, beispielsweise zur Drehachse des Trägerkörpers bzw. zu einem weiteren vom Trägerkörper getragenen Werkzeug vornehmen zu können. So ist es beispielsweise bei einem Werkzeug zur Bearbeitung von Ventilsitzen in Verbrennungsmotoren erforderlich, die Neigung der Ventilsitzfläche winkelminutengenau zur Aufnahmefläche für die Führungsbuchse des Ventilschafts zu fertigen. Es ist deshalb wichtig, das Werkzeug so auszubilden, dass die Wendeschneidplatte nicht nur stabil vom Trägerkörper getragen wird, sondern auch mit einfachen Handgriffen und schnell nach erfolgter Grobpositionierung vorzugsweise bezüglich mehrerer Freiheitsgrade feinjustiert und festgespannt werden kann.

Der Erfindung liegt die Aufgabe zu Grunde, ein Werkzeug der Eingangs beschriebenen Art derart weiterzubilden, dass es mit einer einfachen Konstruktion gelingt, Schneideinsätze, insbesondere Wendeschneidplatten nach DIN, derart am Trägerkörper zu fixieren, das bei geringerem Bauraum eine exakte Feineinstellung der Funktionsschneide sichergestellt werden kann, wobei der Kraftfluss von der Schneide zum Trägerkörper den Schneideinsatz möglichst gering und definiert beanspruchen soll.

Diese Aufgabe wird durch die Merkmale des Patentanspruchs 1 gelöst.

Erfindungsgemäß wird der Schneideinsatz vorzugsweise formschlüssig in einer Tasche der Spannpratze aufgenommen. Die Spannpratze spannt über die Tasche den Schneideinsatz gegen eine entsprechend geformte Stützfläche, die erfindungsgemäß unmittelbar am Trägerkörper ausgebildet ist. Auf diese Weise kann die Anzahl der Bauteile auf ein Minimum beschränkt bleiben, wodurch auch der Kraftfluss von der Funktionsschneide zum Trägerkörper optimiert wird. Da lediglich ein bewegliches Teil, nämlich die Spannpratze am Trägerkörper fixiert werden muss, wird auch wenig Bauraum benötigt, sodass das erfindungsgemäße Spannprinzip für alle Arten von Werkzeugen, das heißt auch für Werkzeuge mit kleinen Arbeitsdurchmessern anwendbar ist. Ein weiterer Vorteil besteht darin, dass erfindungsgemäß der Schneideinsatz, wie z.B. eine Wendeschneidplatte keine zentrale Durchgangsbohrung mehr benötigt, um die Festlegung am Werkzeug zu bewerkstelligen. Es können damit auch kleinste Wendeschneidplatten eingesetzt werden, die ansonsten durch einen zentralen Durchbruch zu sehr geschwächt würden. Die Beanspruchung des Schneideinsatzes, insbesondere einer eingesetzten Wendeschneidplatte erfolgt derart, dass die Platte jeweils großflächig einerseits in der Tasche der Spannpratze und andererseits an der Stützfläche am Trägerkörper anliegt. Kontaktspannungen können dadurch minimiert werden, was insbesondere dann von Vorteil ist, wenn extrem harte Schneidwerkstoffe, wie z.B. Hartmetall, Keramik-Werkstoffe oder Cermet-Werkstoffe Anwendung finden. Da die Einstellung des Schneideinsatzes bzw. der Wendeschneidplatte nicht direkt, sondern mittelbar über die Einstellung der Spannpratze erfolgt, können die Einstell- und Justiereinrichtungen verhältnismäßig groß dimensioniert werden, was sich positiv auf die Handhabung zur Schneidenjustierung auswirkt. Auch kann die auf den Schneideinsatz aufgebrachte Klemmkraft angehoben werden, weil größere Spanneinrichtungen verwendet werden können. So können bedeutend größere Schrauben verwendet werden mit größeren Schlüsselweiten und damit mit größeren übertragbaren Kräften.

Patentanspruch 1 definiert ferner eine besonders einfache Einrichtung zum Festspannen der Spannspratze. Grundsätzlich ist es ausreichend, wenn die Spannschraube in einen bestimmten Anstellwinkel zur Stützfläche ausgerichtet ist. Vorzugsweise wird dieser Winkel jedoch im wesentlichen 90* betragen.

Es ist demnach erfindungsgemäß lediglich erforderlich, für den Durchtritt der Spannschraube ein gewisses, geringes seitliches Spiel vorzusehen, um eine Lageverstellung der Spannpratze und damit des Schneideinsatzes relativ zum Trägerkörper mit den erforderlichen Freiheitsgraden sicherzustellen.

Die Merkmale des Patentanspruchs 1 machen deutlich, dass bei der Verstellung der Schneideinsatz, beispielsweise die Wendeschneidplatte den flächigen Kontakt mit der Stützfläche nicht verliert, wodurch die Beanspruchung des Schneideinsatzes, insbesondere einer Wendeschneidplatte gut kontrollierbar bleibt. Der Schneideinsatz kann dementsprechend bereits mit verhältnismäßig großer Kraft gegen die Stützfläche gedrückt werden, bevor die Feinjustierung der Lage der Funktionsschneide vorgenommen wird.

Vorzugsweise nimmt die Tasche in der Spannpratze den Schneideinsatz derart formschlüssig auf, dass der Schneideinsatz über zumindest zwei im Winkel zueinander stehende Flächen in der Tasche abstützbar ist. Damit ergibt sich eine statisch bestimmte Lagefixierung bei einer Minimierung von auf die Wendeschneidplatte einwirkenden Zwangskräften. Die formschlüssige Aufnahme des Schneideinsatzes, wie z.B. einer Wendeschneidplatte nach DIN in der Tasche der Spannpratze lässt eine Vielzahl von Gestaltungsmöglichkeiten der Tasche zu. Es ist auch möglich, den Schneideinsatz über zusätzliche Flächen zu stabilisieren, beispielsweise durch eine flächige Anlage der Freifläche des Schneideinsatzes an hinterschnittenen Wänden der Tasche.

Eine besonders einfache Gestaltung ergibt sich mit der Weiterbildung des Patentanspruchs 3, gemäß dem die Spannpratze im Wesentlichen die Form eines Quaders hat. In diesem Fall wird die Tasche in der Spannpratze in einer Planfläche des Quaders als Ausnehmung ausgebildet, wobei diese Ausnehmung an die Abmessung des Schneideinsatzes derart angepasst ist, dass der Schneideinsatz in seinem in der Spannpratze aufgenommenen Zustand mit einem gegen die Stützfläche anschlagenden Kontaktbereich um ein vorbestimmtes Maß von der Spannpratze vorsteht. Dieses Maß beträgt beispielsweise den Bruchteil eines mm, beispielsweise 0.2 mm. Die Spannpratze wird dadurch gegen den Trägerkörper derart gespannt, dass sie zu beiden Seiten der Krafteinleitung für die Klemmkraft Auflagepunkte hat, was den Vorteil einer genau definierten Krafteinleitung hat.

Die Konstruktion wird zusätzlich dadurch vereinfacht, wenn - gemäß Patentanspruch 4 - die Spannpratze in einer Ausnehmung des Trägerkörpers aufgenommen ist, wobei die Stützfläche Bestandteil der Ausnehmung ist.

Besonders einfache Maßnahmen durch Ermöglichung der Feinjustierung des Schneideinsatzes am Trägerkörper sind Gegenstand der Ansprüche 6 und 7.

Die Weiterbildung des Patentanspruchs 12 eröffnet die Möglichkeit, die Spannpratze in einer zur Stützfläche parallelen Ebene zu verschieben bzw. zu verschwenken. In Verbindung mit der Weiterbildung nach Patentanspruch 17 ist eine Einstellung in zwei Koordinatenrichtungen möglich, wobei der besondere Vorteil erzielt wird, dass die Justiereinrichtungen in einem Bereich liegen, der von der Funktionsschneide des Schneideinsatzes bzw. der Wendeschneidplatte verhältnismäßig weit entfernt liegt. Die Geometrie der Spannpratze kann dabei nach wie vor sehr einfach gehalten werde. Es ist lediglich eine Ausnehmung zur Ausbildung der Tasche für den Schneideinsatz und ein Durchbruch zur Aufnahme einer zentralen Klemmschraube erforderlich.

Es hat sich gezeigt, dass das erfindungsgemäße Konzept der Schneideinsatzspannung besonders dann vorteilhaft ist, wenn das Werkzeug als drehangetriebenes Bohrungs-Nachbearbeitungswerkzeug gestaltet wird. In diesem Fall kommt die Einfachheit der Konstruktion besonders gut zum tragen, da sich der reduzierte Bauraum zusätzlich positiv auf das Schwingungsverhalten des Werkzeugs auswirkt. Von zusätzlichem Vorteil ist dabei auch, das der Späneabtransport durch die Klemmkonstruktionen für den Schneideinsatz nur unwesentlich beeinträchtigt wird, und zwar selbst dann, wenn die Funktionsschneiden des zumindest einen Schneideinsatzes auf einen kleinen Durchmesser liegen.

Vorteilhafte Weiterbildungen der Erfindung sind Gegenstand der übrigen Unteranspruche.

Nachstehend werden anhand schematischer Zeichnungen Ausführungsbeispiele der Erfindung näher erläutert. Es zeigen:
Figur 1 eine perspektivische Ansicht einer ersten Ausführungsform des Werkzeugs, wobei das Werkzeug als Feinbearbeitungswerkzeug zur Bearbeitung von Ventilsitzen in Verbrennungsmotoren ausgebildet ist;
Figur 2 in etwas vergrößertem Maßstab die Seitenansicht eines Teilbereichs des Werkzeugs gemäß Figur 1 bei demontiertem Reibahlen-Einsatz;
Figur 3 eine Seitenansicht der bei dem Werkzeug nach Figur 1, 2 verwendeten Spannpratze für einen Schneideinsatz in Form einer DIN Wendeschneidplatte;
Figur 4 die Ansicht gemäß "IV" in Figur 3;
Figur 5 die Ansicht gemäß "V" in Figur 3;
Figur 6 die Ansicht gemäß "VI" in Figur 3;
Figur 7 die Einzelheit "VII" in Figur 3;
Figur 8 die Schnittansicht bei einer Schnittführung entlang der Linie "VIII-VIII" in Figur 3;
Figur 9 in etwas verkleinertem Maßstab eine perspektivische Ansicht der Spannpratze bei herausgenommenem Schneideinsatz; und
Figur 10 in vergrößertem Maßstab eine perspektivische Ansicht einer Spannpratze mit davon geklemmtem Schneideinsatz gemäß einer weiteren Ausführungsform des Werkzeugs.

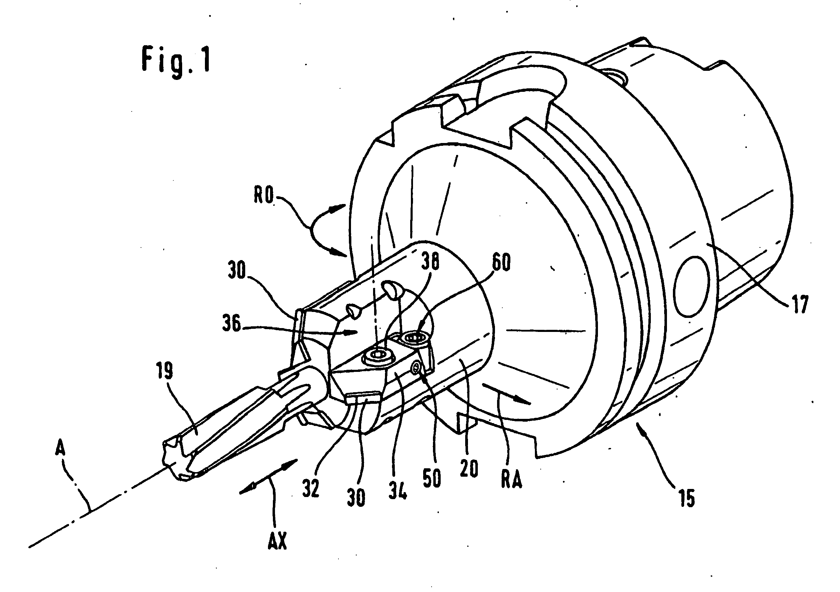

In Figur 1 ist mit dem Bezugszeichen 20 ein eine Vielzahl von Schneideeinsätzen tragender Trägerkörper 20 eines drehangetriebenen Werkzeuges 15 bezeichnet, das eine Drehachse A hat. Der Trägerkörper 20 hat im Wesentlichen eine zylindrische Form und sitzt in einer Werkzeug- Grundaufnahme 17. Mit dem Bezugszeichen 19 ist eine Reibahle bezeichnet, die mit ihrem Schaft fest im Trägerkörper 20 sitzt.

Das in Figur 1 gezeigte Werkzeug wird beispielsweise bei der Fertigung von Zylinderköpfen für Verbrennungsmotoren eingesetzt, und im einzelnen zur Feinbearbeitung einer Bohrung zur Aufnahme einer Führungsbuchse für den Ventilschaft einerseits und der Ventilsitzfläche am Zylinderkopf andererseits. Die Bohrung für die Führungsbuchse wird von der Reibahle 19 hergestellt, während die Ventilsitzfläche von den Funktionsschneiden der Schneideinsätze 30 bearbeitet wird.

Es liegt auf der Hand, dass zwischen den beiden Funktionsflächen, nämlich der Bohrung für die Führungsbuchse und der Ventilsitzfläche eine exakte eng tolerierte Relativlage eingehalten werden muss, um einen einwandfreien Betrieb des Ventilmechanismus sicherzustellen. Zu diesem Zweck muss dafür Sorge getragen werden, dass die Lage der Funktionsschneiden 32 relativ zur Drehachse A bzw. zur Reibahle 19 exakt einjustiert und in der einjustierten Lage fixiert beibehalten wird. Es ist somit erforderlich, den Schneideinsatz, in der gezeigten Ausführungsform die DIN-Wendeschneidplatte 30, hinsichtlich dreier Freiheitsgrade zu positionieren, nämlich einmal bzgl. des axialen Freiheitsgrades AX, hinsichtlich des radialen Freiheitsgrades RA und hinsichtlich des rotatorischen Freiheitsgrades RO. Die Feineinstellung muss dabei so erfolgen, das eine Einstellmöglichkeit im Hundertstelbereich eines mm bzw. im Winkelminutenbereich sichergestellt ist.

Zu diesem Zweck ist der Schneideinsatz, d.h. die Wendeschneidplatte 30 formflüssig in einer Spannpratze 34 aufgenommen, die ihrerseits einstellbar unter Berücksichtigung der vorstehend beschriebenen drei Freiheitsgrade AX, RA und RO am Trägerkörper 20 gehalten ist. Weil der Schneideinsatz, d.h. die Wendeschneidplatte 30 formschlüssig in der Spannpratze 34 aufgenommen ist, wird die Wendeschneidplatte durch Justierung der Spannpratze 34 mitgenommen und erfährt so zusammen mit der Spannpratze eine Feinjustierung. Die Justierung erfolgt mittels zweier Stelleinrichtungen, die in Figur 1 mit dem Bezugszeichen 50 bzw. 60 bezeichnet sind. Die Justiereinrichtung 50 dient zur Realisierung der radialen Verstellung (Freiheitsgrad RA) und der Dreheinstellung (rotatorischer Freiheitsgrad RO) während die Justiereinrichtung 60 zur axialen Einstellung (Freiheitsgrad AX) herangezogen wird.

Die Spannpratze 34 hat im Wesentlichen die Form eines Quaders, der in einer winkelförmigen Ausnehmung 36 des Trägerkörpers 20 aufgenommen ist.

Mit dem Bezugszeichen 38 ist eine Spannschraube bezeichnet, mit der die Spannspratze 34 unter Zwischenschaltung des betreffenden Schneideinsatzes 30 gegen den Trägerkörper 20 gespannt werden kann.

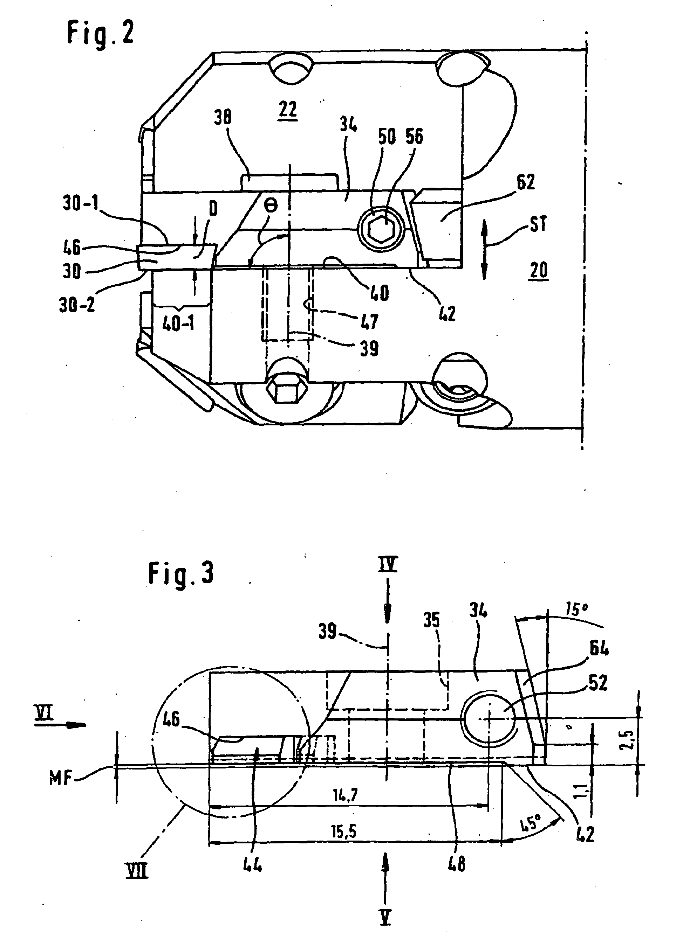

Einzelheiten der Spannung und der Justierung des Schneideinsatzes 30 ergeben sich aus der folgenden Beschreibung der Figuren 2 bis 9, die anhand von vermaßten Werkstattzeichnungen ein mögliches Ausführungsbeispiel der Erfindung zeigen.

Man erkennt aus der Darstellung gemäß Figur 2, dass die Ausnehmung 36 im Trägerkörper 20 von zwei Flächen begrenzt ist, nämlich einer Stützfläche 40 und einer dazu senkrecht liegenden Wand 42. Die Spannpratze stützt sich bodenseitig über einen Flächenabschnitt 42 an der Stützfläche 40 ab. Im Bereich ihres dem Flächenabschnitt abgewandten Endes ist die Spannpratze 34 eine Tasche 44 eingearbeitet in der die Wendeschneidplatte 30 formflüssig aufgenommen ist. Die Tasche 44 hat eine Bodenfläche 46, an der sich die Wendeschneidplatte ihrer einen Großfläche 30-1 flächig abstützt. Die gegenüberliegende Großfläche 30-2 stützt sich an der Stützfläche 40 des Trägerkörpers 20 ab.

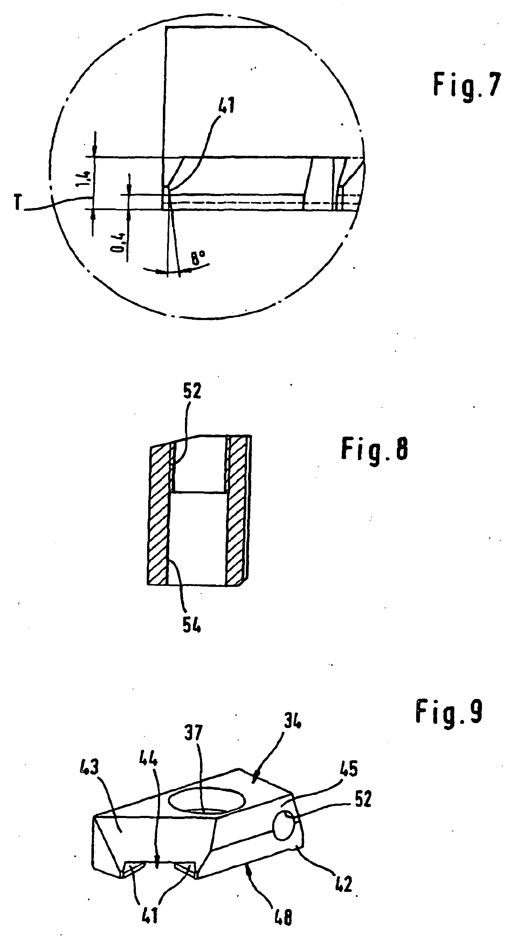

Die Tasche 44 ist so ausgebildet, dass die Tiefe T (vgl. Figur 7) um ein vorbestimmtes Maß kleiner ist als die Dicke D (vgl. Figur 2) der Wendeschneidplatte 30. Darüber hinaus hat die Bodenfläche der Spannpratze 34 im Anschluss an den Flächenabschnitt 42 eine Freifräsung 48, die sich bis zum vorderen Ende (linkes Ende gemäß Figur 3) der Spannpratze 34 erstreckt. Mit dieser Ausgestaltung ist sichergestellt, dass im montierten Zustand der Wendeschneidplatte 30 die Spannpratze 34 nur mit ihrem Flächenabschnitt 42 am Trägerkörper 20 anliegt, sodass beim Anziehen der Spannschraube 38 die Klemmkraft über die Flächenpaarung 46/30-1 auf die Wendeschneidplatte 30 übertragen werden kann.

Wie die Figuren 2 bis 9 zeigen, befindet sich die Achse 39 der Spannschraube 38 in wesentlichen mittig zwischen den Flächenabschnitt 42 und dem Stützflächenbereich 40-1, über den die Wendeschneidplatte 30 flächig an der Stützfläche 40 aufliegt.

Zur Aufnahme der Spannschraube 38 ist in der Spannpratze 34 ein Durchbruch 37 vorgesehen, der die Form eines Langlochs hat und dessen kleinerer Durchmesser D37 größer ist als der Durchmesser des nicht gezeigten Schafts der Spannschraube 38. Zur Aufnahme eines Schraubkopfes, der beispielsweise mit einer Innensechskantausnehmung ausgestattet ist, ist auf der Oberseite der Spannspratze 34 eine Senkung 35 ausgebildet. Die Spannschraube greift zum Klemmen der Spannpratze 34 in eine strichpunktiert angedeutete Gewindebohrung 47 im Trägerteil 20 ein.

Die Achse 39 der Spannschraube steht bei dem gezeigten Ausführungsbeispiel senkrecht auf der Stützfläche 40. Dies ist jedoch nicht unbedingt erforderlich. Es wäre auch denkbar, die Achse im spitzen Winkel zum Flächenabschnitt 42 zu neigen.

In Figur 3 ist mit dem Bezugszeichen MF das Maß bezeichnet, um die die Fläche der Freifräsung 48 hinter der Oberfläche des Flächenabschnitts 42 zurückbleibt. Dieses Maß beträgt zwischen 0.1 und 0.5 mm, vorzugsweise zwischen 0.1 und 0.3 mm.

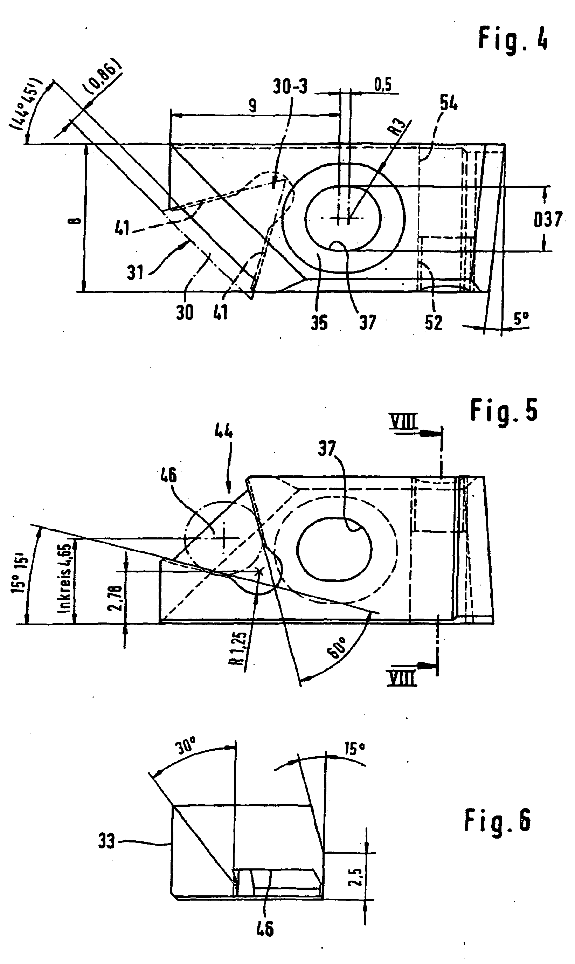

Bei dem gezeigten Ausführungsbeispiel ist die Wendeschneidplatte 30 von einer dreieckförmigen Platte gebildet, deren Kontur in Figur 4 mit strichpunktierter Linie angedeutet ist. Die Tasche 44 in der Spannpratze 34 ist dementsprechend so ausgebildet, dass für die Wendeschneidplatte drei Stützflächen vorgesehen sind. An die zum Flächenabschnitt 42 parallele Bodenfläche 46 schließen sich hinterschnittene Wangenflächen 41 (siehe Figur 9) an, deren Neigung so an die Gestalt der Wendeschneidplatte anpasst ist, das sich im eingeschobenen Zustand die Feiflächen der Wendeschneidplatte flächig an diesen Wangenflächen abstützen. Die Form der Tasche ist darüber hinaus so gewählt, das im eingesetzten Zustand der Wendeschneidplatte 30 die Funktionsschneide 31 vom Spannpratzenkörper 34 vorsteht, sodass die Schneide in Funktion treten kann.

Die Tasche wird vorzugsweise dadurch hergestellt, das mit einem hinterschnittenen Fräser in den Körper der Spannpratze 34 eingetaucht wird, was durch den strichpunktierten Kreis in Figur 5 angedeutet ist. Der Grund der Freifräsung für die Tasche 44 ist mittels eines zylindrischen Fingerfräsers freigefräst, sodass für die innenliegende Spitze 30-3 der Wendeschneidplatte 30 im eingesetzten Zustand ein Freiraum verbleibt.

Wenn die Wendeschneidplatte 30 gemäß Figur 4 in die Tasche 44 eingesetzt ist, wird sie durch die hinterschnittene Gestaltung der Wangenflächen 41 bereits in der Tasche gehalten. Die Spannpratze mit eingesetzter Wendeschneidplatte 30 kann nun auf die Stützfläche 40 gesetzt werden. In diesem Zustand kann die Spannschraube 38 durch den Durchbruch 37 gesteckt und mit dem Gewinde 47 in Eingriff gebracht werden. Durch Anziehen der Schraube gelangt der Schraubenkopf in immer festeren Kontakt mit der Senkung 35, wodurch die Wendeschneidplatte mit ihrer Fläche 30-2 gegen die Stützfläche 40 gedrückt wird. In diesem vormontieren Zustand kann nunmehr eine Feineinstellung der Orientierung der Funktionsschneide 31 erfolgen:

Zu diesem Zweck ist seitlich des Durchbruchs 37 eine Gewindebohrung 52 ausgebildet, deren Achse im Wesentlichen senkrecht auf einer Seitenwand 33 und damit auf dem Wandabschnitt 22 der Ausnehmung 36 im Trägerkörper 20 steht. Die Gewindebohrung geht in einen zylindrischen Bohrungsabschnitt 54 über, in dem ein nicht näher gezeigter zylindrischer, geschliffener Bolzen beweglich geführt ist. In die Gewindebohrung 52 ist eine Madenschraube 50 einschraubbar, die stirnseitig eine Innensechskantausnehmung 56 hat. Die Madenschraube stützt sich beim Einschrauben mit zunehmender Kraft an dem in der zylindrischen Bohrung 54 mit Passung geführten zylindrischen und geschliffenen Stift ab, der aus der zylindrischen Bohrung 54 herausgedrückt wird und sich seinerseits mit zunehmender Kraft am Wandabschnitt 22 abstützt. Indem die Madenschraube somit in die Spannpratze 34 gedreht wird, wird die Spannpratze mit dem der Wendeschneidplatte 30 abgewandten Teil radial nach außen verschoben, sodass eine Feinjustierung der Funktionsschneide 31 bzgl. der Freiheitsgrade RA (radial) und/oder RO (Verschwenkbewegung) erfolgt.

Da für diese Feineinstellung ein geschliffener Bolzen verwendet wird, kann die Einstellung ruckfrei erfolgen, und es kann dafür gesorgt werden, das sich der Druckbolzen nicht in den Wandabschnitt 22 eingräbt. Selbstverständlich sind die Abmessungen des Durchbruchs 37 so gewählt, das genügend Freiraum um den Schaft der Spannschraube herum verbleibt, damit die Feineinstellung zwängungsfrei durchgeführt werden kann. Es hat sich gezeigt, dass es die erfindungsgemäße Ausgestaltung der Feinjustierungs- und Spanneinrichtung ermöglicht, die Funktionsschneide 31 im Toleranzbereich von einigen wenigen Winkelminuten exakt zu positionieren.

Damit der dritte Freiheitsgrad, d.h. die Feinverstellung in axialer Richtung (Freiheitsgrad AX) durchgeführt werden kann, stützt sich die der Wendeschneidplatte 40 abgewandte und auf der Stützfläche 40 bzw. auf den Flächenabschnitt 42 im wesentlichen senkrecht stehende Wand an einem konischen Stellteil 62 ab, das beispielsweise von einem konischen Ring gebildet ist, der sich entweder entlang einer Linie oder entlang einer Fläche an einer Gegenfläche 64 der Spannpratze 34 abstützt. Das konische Stellteil 62 wird beispielsweise mittels einer Links-/Rechtsschraube, deren Kopf in Figur 1 zu sehen ist, angetrieben, sodass es bei Betätigung über eine Innensechskantausnehmung entsprechend dem Doppelpfeil ST in Figur 2 bewegbar ist.

Wenn das konische Stellteil auf die Stützfläche 40 zu bewegt wird, drückt der zunehmende Flächenkontakt zwischen dem konischen Stellteil 62 und der ebenfalls konischen Gegenfläche 64 die Spannpratze in axialer Richtung, d.h. gemäß Figur 3 nach links, wodurch eine Längeneinstellung der Funktionsschneide 30 durchgeführt wird. Der Winkel der Konizität des konischen Stellteils 62 bzw. der Gegenfläche 64 ist in Figur 3 mit 15 ° angegeben. Es ist jedoch klar, das diese Maßangabe nur beispielhaft zu sehen ist. Durch geeignete Variation dieses Konizitätswinkels kann der Grad der Übersetzung für die Feineinstellung entsprechend verstärkt werden. Gleiches gilt für die Dimensionierung der Gewindeabschnitte für die nicht näher gezeigte Links-/Rechtsschraube.

Aus der vorstehenden Beschreibung wird klar, dass die Wendeschneidplatte 30 dadurch, das sie formschlüssig und vorzugsweise in der hinterschnittenen Tasche der Spannpratze aufgenommen ist, bei der Feinjustierung relativ zur Spannpratze nicht mehr verschoben wird, sodass die Funktionsschneide 31 bei Betätigung der Justiereinrichtungen 50, 60 tatsächlich die gewünschten Bewegungen ausführt. Mit anderen Worten, der Schneideinsatz bzw, die Wendeschneidplatte macht die Bewegungen der Spannpratze gleichermaßen mit, ohne dass es zusätzlicher Hilfsmittel bedarf. Die Wendeschneidplatte kann dadurch sehr einfach gestaltet werden, das heißt, man kann mit gewöhnlichen DIN-Wendeschneidplatten arbeiten, die darüber hinaus durch keinerlei Durchbrüche geschwächt werden müssen.

Wenn die Justierung der Funktionsschneide 31 mit den drei Freiheitsgraden AX, RA und RO abgeschlossen ist, wird die Spannschraube 38 endgültig angezogen, wodurch die Lage der Funktionsschneide 31 bzgl. des Trägerkörpers 20 unverrückbar festgelegt wird. Da die Tasche 44 in der Spannpratze eine verhältnismäßig große Auflagefläche (wie aus Figur 5 ersichtlich) für die Wendeschneidplatte 30 ausbildet, wird die Wendeschneidplatte selbst bei größten Spannkräften nicht überbeansprucht, zumal sie sich über eine ebenso große Gegenfläche an der Stützfläche abstützen kann. Die Klemmung der Wendeschneidplatte erfolgt direkt hinter der Schneidkante, sodass ein äußerst guter Kraftfluss von der Schneide in das Werkzeug sichergestellt wird. Das Werkzeug ist darüber hinaus sehr wirtschaftlich einsetzbar: Für den Fall, dass eine andere Form von Wendeschneidplatten zum Einsatz kommen soll, muss lediglich die Spannpratze gewechselt werden. Weil sich darüber hinaus die Wendeschneidplatte flächig in der Tasche abstützt, wird die Wendeschneidplatte auch bei der Feinjustierung und selbst dann, wenn sie durch die Spannschraube schon mit großer Kraft gegen die Stützfläche gepresst wird, nicht überbeansprucht, zumal sie während der Feinjustierung flächig und sandwichartig zwischen den Spannflächen gehalten ist.

Mann erkennt aus der Darstellung gemäß Figur 9, dass die Form der Spannpratze 34 sehr einfach gehalten werden kann. Es ist im Wesentlichen lediglich ein quaderförmiger Körper erforderlich, der an einer Ecke zur Ausbildung einer Tasche 44 für die Aufnahme der Wendeschneidplatte freigefräst ist, der bodenseitig eine weitere Freifräsung 58 hat und der mit einem Durchbruch 37 für die Spannschraube und mit einer Bohrung 52, 54 für die Justiereinrichtung 50 versehen ist. Mit dem Bezugszeichen 43 und 45 sind Schrägflächen bezeichnet, deren Funktion darin besteht, den Spannabfluss zu verbessern.

Selbstverständlich sind Abweichungen von dem zuvor beschriebenen Ausführungsbeispiel möglich, ohne den Grundgedanken der Erfindung zu verlassen.

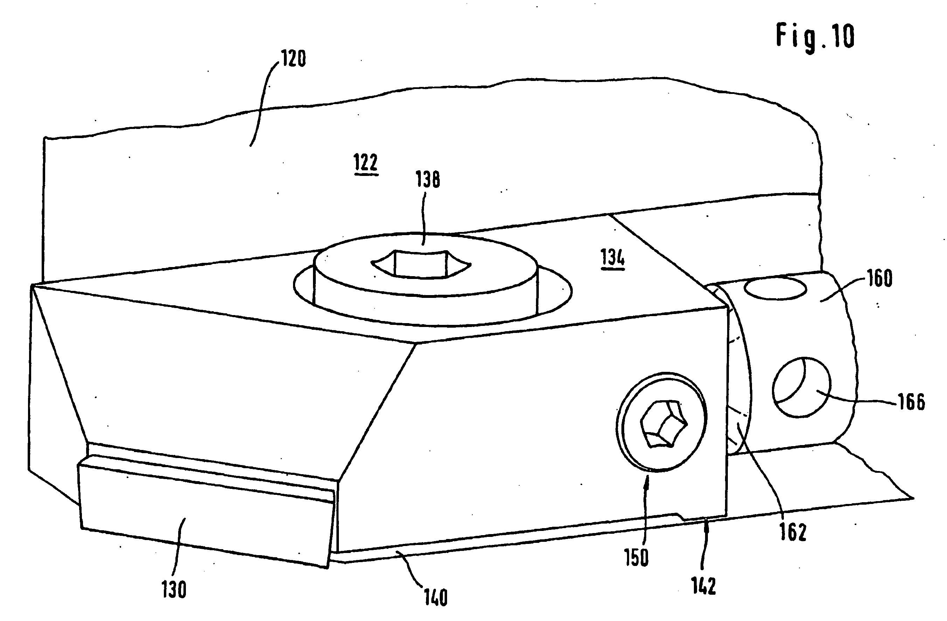

In Figur 10 ist beispielsweise eine Variante gezeigt, bei der die Axialverstellung der Spannpratze 134 mittels einer modifizierten Justiereinrichtung 160 durchgeführt wird, die sich mit einem balligen Stützabschnitt 162 an einer ebenen Fläche der Spannpratze 134 abstützt. Mit 166 sind Durchbrüche angedeutet, über die ein geeignetes Werkzeug zur Längsverstellung des balligen Abschnitts 162 betätigbar sind. Im übrigen entspricht die Ausführungsform nach Figur 10 derjenigen der Figuren 1 bis 9, sodass zur Vermeidung von Wiederholungen auf eine eingehende Beschreibung dieser Ausführungsform verzichtet werden kann. Bauelemente der Ausführungsform nach Figur 10, die den Bestandteilen der Variante nach den Figuren 1 bis 9 entsprechen, sind mit ähnlichen Bezugszeichen bezeichnet, denen allerdings eine "1" vorangestellt ist.

Anstelle der in den Figuren gezeigten singulären Justiereinrichtung 50, 150 zur Einstellung des radialen Abstandes der Spannpratze 34, 134 von der Wand 22, 122 können auch zwei parallel angeordnete und ansonsten identische Justiereinrichtungen verwendet werden, sodass eine reine radiale Verstellung der Spannpratze durchgeführt werden kann.

Es ist darüber hinaus selbstverständlich möglich, das Werkzeug mit Schneideinsätzen bzw. Wendeschneidplatten zu bestücken, die eine grundsätzlich andere Formgebung haben, wie z.B. quadratische Wendeschneidplatten nach DIN.

In den vorstehend beschriebenen Ausführungsbeispielen ist die Wendeschneidplatte in der Tasche durch Reibschluss bzw. durch die hinterschnittenen Wangenflächen gehalten. Um eine Bewegung des Schneidansatzes aus der Tasche heraus noch zuverlässiger auszuschließen, könnten zusätzliche Maßnahmen getroffen werden, um den Schneideinsatz in der Tasche derart anzuheften bzw. zu positionieren, dass eine Relativverschiebung bei der Feinpositionierung der Spannpratze nicht stattfindet. Dies könnte beispielsweise durch zusätzliche Flächen oder Rippen folgen, die mit Gegenflächen in der Wendeschneidplatte zusammenwirken.

Vorstehend wurde das Justierprinzip mittels Madenschraube und geschliffenen Bolzen anhand der Justiereinrichtung 50 bzw. 150 beschrieben. Es ist jedoch gleichermaßen möglich, mit einer derartigen Verstellung im Bereich der Axialverstellung, d.h. der Justiereinrichtung 60 bzw. 160 zu arbeiten.

Die Erfindung schafft somit ein Werkzeug, insbesondere ein rundlaufendes Werkzeug für die Bearbeitung, insbesondere für die spanabhebende Bearbeitung von Werkstücken, bei dem ein Trägerkörper zumindest einen Schneideinsatz, insbesondere einen plattenförmigen Schneideinsatz, wie z.B. eine DIN-Wendeschneidplatte, positionsgenau trägt. Es ist eine Einstellvorrichtung zur Einstellung der Position des Schneideinsatzes relativ zum Trägerkörper und eine Spanneinrichtung unter Verwendung einer Spannpratze vorgesehen, mit der der Schneideinsatz der eingestellten Position relativ zum Trägerkörper dadurch fixierbar ist, dass die Spannpratze den Schneideinsatz flächig gegen eine Stützfläche drückt. Um Wendeschneidplatten beliebiger Form und vor allen Dingen beliebig kleine Wendeschneidplatten ohne das Vorsehen von schwächenden Durchbrüchen verwenden zu können und um bei platzsparender Gestaltung der Justier- und Spanneinrichtung ein größtmögliches Maß an Freiraum für die Gestaltung des Werkzeugs und des Spanabflusses zu erhalten, ist der Schneideinsatz in einer Tasche der Spannpratze aufgenommen und die Stützfläche direkt am Trägerkörper ausgebildet.

## Patentansprüche

1. Werkzeug, insbesondere rundlaufendes Werkzeug für die Bearbeitung, insbesondere für die spanabhebende Bearbeitung von Werkstücken, bei dem ein Trägerkörper (20, 120) zumindest einen Schneideinsatz, insbesondere einen plattenförmigen Schneideinsatz (30; 130) positionsgenau trägt, wobei eine Einstelleinrichtung zur Einstellung der Position des Schneideinsatzes (30; 130) relativ zum Trägerkörper (20; 120) und eine Spanneinrichtung in Form einer Spannpratze (34; 134) vorgesehen ist, mit der der Schneideinsatz (30; 130) in der eingestellten Position relativ zum Trägerkörper (20; 120) **dadurch** fixierbar ist, dass die Spannpratze (34; 134) den Schneideinsatz (30; 130) flächig gegen eine Stützfläche (40; 140) drückt, wobei der Schneideinsatz (30; 130) in einer Tasche (44; 144) der Spannpratze (34; 134) aufgenommen ist, **dadurch gekennzeichnet, dass**
die Stützfläche (40; 140) am Trägerkörper (20; 120) ausgebildet ist,
die Spannpratze (34; 134) gegen den Schneideinsatz (30; 130) mittels einer Spannschraube (38; 138) spannbar ist, die in einem Anstellwinkel (THETA) zur Stützfläche (40; 140) ausgerichtet ist, und
die Spannschraube (38; 138) die Spannpratze (34; 134) mit seitlichem Spiel durchdringt, und
die Spannpratze (34) und damit der Schneideinsatz (30) parallel zur Ebene der Stützfläche (40) verschiebbar und verschwenkbar ist.

2. Werkzeug nach Anspruch 1, **dadurch gekennzeichnet, dass** die Tasche (44; 144) in der Spannpratze (34; 134) den Schneideinsatz (30; 130) derart formschlüssig aufnimmt, dass der Schneideinsatz (30; 130) über zumindest zwei im Winkel zueinander stehende Flächen (41, 46) in der Tasche (44; 144) abstützbar ist.

3. Werkzeug nach Anspruch 1 oder 2, **dadurch gekennzeichnet, dass** die Spannpratze (34; 134) im wesentlichen die Form eines Quaders hat und die Tasche (44; 144) in einer Planfläche (42, 48) des Quaders als Ausnehmung ausgebildet ist, die an die Abmessungen des Schneideinsatzes (30; 130) derart angepasst ist, dass der Schneideinsatz (30; 130) in seinem in der Spannpratze (34; 134) aufgenommenen Zustand mit einem gegen die Stützfläche (40; 140) anschlagenden Kontaktbereich (30-2) um ein vorbestimmtes Maß (D-T) von der Spannpratze (34; 134) vorsteht.

4. Werkzeug nach einem der Ansprüche 1 bis 3, **dadurch gekennzeichnet, dass** die Spannpratze (34; 134) in einer Ausnehmung (36) des Trägerkörpers (20) aufgenommen ist, wobei die Stützfläche (40) Bestandteil der Ausnehmung (36) ist.

5. Werkzeug nach einem der Ansprüche 1 bis 4, **dadurch gekennzeichnet, dass** der Anstellwinkel (THETA) im wesentlichen 90 ° beträgt.

6. Werkzeug nach einem der Ansprüche 1 bis 5, **dadurch gekennzeichnet, dass** sich die Spannpratze (34) über eine weitere Auflagerfläche (42; 142) am Trägerkörper (20; 120) abstützt.

7. Werkzeug nach einem der Ansprüche 4 bis 6, **dadurch gekennzeichnet, dass** die weitere Auflagerfläche (42; 142) gegen eine Fläche der Ausnehmung (36) für die Spannpratze (34) spannbar ist.

8. Werkzeug nach einem der Ansprüche 1 bis 7, **dadurch gekennzeichnet, dass** der Schneideinsatz (30) von einer Schneidplatte, insbesondere einer Wendeschneidplatte gebildet ist, die sich flächig einerseits an der Stützfläche (40) des Trägerkörpers (20) und andererseits an einer Bodenfläche (46) der Tasche (44) in der Spannpratze (34) abstützt.

9. Werkzeug nach Anspruch 8, **dadurch gekennzeichnet, dass** die Ausnehmung (44) in der Spannpratze (34) hinterschnittene Seitenwände (41) hat, an der sich Freiflächen (30-4) des Schneideinsatzes (30) abstützen.

10. Werkzeug nach einem der Ansprüche 3 bis 9, **dadurch gekennzeichnet, dass** die Ausnehmung (44) in der Spannpratze (34) in einem Eckenbereich ausgebildet ist.

11. Werkzeug nach einem der Ansprüche 3 bis 10, **dadurch gekennzeichnet, dass** die Tasche (44) in einem Eckenbereich auf der der Stützfläche (40) zugewandten Seite in Form einer Einfräsung mit einer zur Stützfläche (40) parallelen Bodenfläche (46) ausgebildet ist.

12. Werkzeug nach einem der Ansprüche 3 bis 11, **dadurch gekennzeichnet, dass** die Spannpratze (34; 134) mittels einer Schraubbolzenanordnung (50, 52, 54; 150) in einer zur Stützfläche (40) parallelen Ebene verschiebbar und/oder verschwenkbar ist.

13. Werkzeug nach Anspruch 12, **dadurch gekennzeichnet, dass** die Schraubbolzenanordnung (50) die Spannpratze (34) im Wesentlichen mittig durchdringt.

14. Werkzeug nach Anspruch 13, **dadurch gekennzeichnet, dass** die Schraubbolzenanordnung (50) einen geschliffenen Bolzen aufweist, mit dem sich die Spannpratze (34) an einer Gegenfläche (22; 122) der Ausnehmung (36) im Trägerkörper (20; 120) abstützt.

15. Werkzeug nach einem der Ansprüche 6 bis 14, **dadurch gekennzeichnet, dass** die weitere Auflagerfläche (42; 142) der Spannpratze (34; 134) im Bereich des bezüglich der Spanneinrichtung (50; 150) anderen Endes der Spannpratze (34; 134) ausgebildet ist.

16. Werkzeug nach Anspruch 15, **dadurch gekennzeichnet, dass** die weitere Auflagerfläche (42; 142) von einem Materialsteg gebildet ist, der durch eine Freifräsung (48) auf der Unterseite der Spannpratze (34) verbleibt.

17. Werkzeug nach einem der Ansprüche 7 bis 16, **dadurch gekennzeichnet, dass** die Spannpratze (34; 134) sich auf der dem Schneideinsatz (30; 130) abgewandten Seite an einem Einstellkörper (62; 162) abstützt.

18. Werkzeug nach Anspruch 17, **dadurch gekennzeichnet, dass** der Einstellkörper von einem Keilkörper (62) gebildet ist, der sich flächig an einer entsprechend gestalteten Außenfläche (64) der Spannpratze (34) abstützt und mittels einer Stelleinrichtung (60) verschiebbar ist.

19. Werkzeug nach einem der Ansprüche 1 bis 18, **dadurch gekennzeichnet, dass** der Schneideinsatz (30; 130) von einer Wendeschneidplatte gebildet ist.

20. Werkzeug nach einem der Ansprüche 1 bis 18, **dadurch gekennzeichnet, dass** der Schneideinsatz (30; 130) die Form einer Polygon-Platte, vorzugsweise einer dreieckförmigen oder quadratischen Platte hat.

21. Werkzeug nach einem der Ansprüche 1 bis 20, **gekennzeichnet durch** die Ausbildung als drehangetriebenes Bohrungs-Nachbearbeitungswerkzeug, bei dem der zumindest eine Schneideinsatz (30; 130) zur Feinbearbeitung einer Fläche dient, welche in einer eng tolerierten Relativlage zur Drehachse (A) des Werkzeugs (15) steht.

22. Werkzeug nach Anspruch 21, **dadurch gekennzeichnet, dass** die Ausnehmung (36) des Trägerkörpers (20) von einer axialen Einfräsung mit zwei im Winkel zueinander stehenden Flächen (40, 22) gebildet ist, von denen eine die Stützfläche (40) für den Schneideinsatz (30) bildet.

23. Werkzeug nach einem der Ansprüche 1 bis 22, **dadurch gekennzeichnet, dass** der Schneideinsatz (30; 130) aus verschleißfestem Material, wie z.B. aus Hartmetall, Keramik oder Cermet besteht.

## Claims

1. A tool, in particular a rotary tool for processing workpieces, in particular for machining workpieces, wherein a carrier element (20; 120) bears at least one cutting insert, in particular a plate-shaped cutting insert (30; 130), in a positionally accurate manner, with an adjusting apparatus for adjusting the position of the cutting insert (30; 130) relative to the carrier element (20; 120) and a clamping device in the form of a clamping claw (34; 134) being provided whereby the cutting insert (30; 130) can be fixed in the adjusted position relative to the carrier element (20; 120) in that the clamping claw presses the cutting insert (30; 130) flat against a support surface (40; 140), the cutting insert (30; 130) being accommodated in a pocket (44; 144) of the clamping claw (34; 134), **characterized in that**
the support surface (40; 140) is formed on the carrier element (20; 120),
the clamping claw (34; 134) can be clamped against the cutting insert (30; 130) by means of a clamping screw (38; 138) which is oriented at a tilt angle (THETA) toward the support surface (40; 140),
the clamping screw (38) penetrates the clamping claw (34) with lateral play, and
the clamping claw (34) and thus the cutting insert (30; 130) is adapted to be displaced and pivoted parallel to the plane of the support surface (40).

2. The tool according to claim 1, **characterized in that** the pocket (44; 144) in the clamping claw (34; 134) accommodates the cutting insert (30; 130) in a form-locking manner such that the cutting insert (30; 130) can be braced through at least two surfaces (41, 46) standing at an angle toward each other in the pocket (44; 144).

3. The tool according to claim 1 or 2, **characterized in that** the clamping claw (34; 134) generally has the shape of a cuboid and the pocket (44; 144) is formed in a plane surface (42, 48) of the cuboid as a recess, which is adapted to the dimensions of the cutting insert (30; 130) such that the cutting insert (30; 130) in its state accommodated in the clamping claw (34; 134) projects from the clamping claw (34; 134) with a contact region (30-2) striking against the support surface (40; 140) by a predetermined dimension (D-T).

4. The tool according to one of claims 1 to 3, **characterized in that** the clamping claw (34; 134) is accommodated in a recess (36) of the carrier element (20), the support surface (40) being a component of the recess (36).

5. The tool according to one of claims 1 to 4, **characterized in that** the tilt angle (THETA) is substantially 90°.

6. The tool according to one of claims 1 to 5, **characterized in that** the clamping claw (34) is braced through a further seating surface (42; 142) on the carrier element (20; 120).

7. The tool according to one of claims 4 to 6, **characterized in that** the further seating surface (42; 142) can be clamped against a surface of the recess (36) for the clamping claw (34).

8. The tool according to one of claims 1 to 7, **characterized in that** the cutting insert (30; 130) is formed by a cutting plate, in particular an indexable insert, which is on the one hand supported flat on the support surface (40) of the carrier element (20) and on the other hand on a bottom surface (46) of the pocket (44) in the clamping claw (34; 134).

9. The tool according to claim 8, **characterized in that** the recess (44) in the clamping claw (34) has undercut side walls (41) on which free surfaces (30-4) of the cutting insert (30) are supported.

10. The tool according to one of claims 3 to 12, **characterized in that** the recess (44) is formed in the clamping claw (34) in a corner region.

11. The tool according to one of claims 3 to 10, **characterized in that** the pocket (44) is formed in a corner region on the side facing the support surface (40) in the form of a milled-in area with a bottom surface (46) parallel to the support surface (40).

12. The tool according to one of claims 3 to 11, **characterized in that** the clamping claw (34; 134) is adapted to be displaced and/or pivoted in a plane parallel to the support surface (40) by means of a screw bolt arrangement (50, 52, 54; 150).

13. The tool according to claim 12, **characterized in that** the screw bolt arrangement (50) penetrates the clamping claw (34) substantially centrally.

14. The tool according to claim 13, **characterized in that** the screw bolt arrangement (50) includes a ground bolt whereby the clamping claw (34) is braced on a matching surface (22; 122) of the recess (36) in the carrier element (20; 120).

15. The tool according to one of claims 6 to 14, **characterized in that** the further seating surface (42; 142) of the clamping claw (34; 134) is formed in the region of the other end of the clamping claw (34; 134) in relation to the clamping means (50; 150).

16. The tool according to claim 15, **characterized in that** the further seating surface (42; 142) is formed by a material web remaining on the underside of the clamping claw (34) as a result of a free milled area.

17. The tool according to one of claims 7 to 16, **characterized in that** the clamping claw (34; 134) is braced on the side facing away from the cutting insert (30; 130) by an adjustment element (62; 162).

18. The tool according to claim 17, **characterized in that** the adjustment element is formed by a wedge element (62) which is braced flat on a correspondingly configured outer surface (64) of the clamping claw (34) and is adapted to be displaced by means of positioning means (60).

19. The tool according to one of claims 1 to 18, **characterized in that** the cutting insert (30; 130) is formed by an indexable insert.

20. The tool according to one of claims 1 to 18, **characterized in that** the cutting insert (30; 130) has the form of a polygonal plate, preferably a triangular or square plate.

21. The tool according to one of claims 1 to 20, **characterized by** its construction as a rotary driven bore hole refinishing tool, where the at least one cutting insert (30; 130) serves for fine machining of a surface which has a relative position toward the axis of rotation (A) of the tool (15) with tight tolerance settings.

22. The tool according to claim 21, **characterized in that** the recess (36) of the carrier element (20) is formed by an axial milling in with two surfaces (40, 22) standing at an angle toward each other, one of which forms the support surface (40) for the cutting insert (30).

23. The tool according to one of claims 1 to 22, **characterized in that** the cutting insert (30; 130) is made of a wear-resistant material such as, e.g., hard metal, ceramic, or cermet.

## Revendications

1. Outil, en particulier un outil rotatif pour l'usinage, en particulier pour l'usinage par enlèvement de copeaux de pièces, dans lequel un corps de support (20; 120) porte au moins un dispositif de coupe, en particulier un dispositif de coupe en forme de plaque (30; 130) positionné précisément, un dispositive d'ajustement destiné à ajuster la position du dispositive de coupe (30; 130) par rapport au corps de support (20; 120) et un dispositif de tension ayant la forme d'une griffe de serrage (34; 134), avec lequel le dispositif de coupe (30; 130) peut être fixé dans la position ajustée par rapport au corps de support (20; 120) de manière à ce que la griffe de serrage (34; 134) comprime pleinement le dispositif de coupe (30; 130) contre une surface de support (40; 140), le dispositif de coupe (30; 130) étant reçu dans une poche (44; 144) de la griffe de serrage (34; 134), **caractérisé en ce que**
la surface de support (40; 140) est formée sur le corps de support (20; 120),
la griffe de serrage (34; 134) peut être mise en tension contre le dispositive de coupe (30; 130) au moyen d'une vis de tension (38; 138), qui est orientée dans un angle d'incidence (THETA) par rapport à la surface de support (40; 140),
la griffe de serrage (34) bute sur une autre surface d'appui (42; 142) sur le corps de support (20; 120), et
la griffe de serrage (34) et ainsi le dispositif de coupe (30) peut être déplacé et incliné parallèlement par rapport à la surface de support (40).

2. Outil selon la revendication 1, **caractérisé en ce que** la poche (44; 144) dans la griffe de serrage (34; 134) reçoit positivement le dispositif de coupe (30; 130) de manière à ce que le dispositif de coupe (30; 130) puisse être soutenu dans la poche (44; 144) par au moins deux surfaces (41, 46) se trouvant à un certain angle l'une par rapport à l'autre.

3. Outil selon la revendication 1 ou 2, **caractérisé en ce que** la griffe de serrage (34; 134) a sensiblement la forme d'un carré et la poche (44; 144) est formée dans une surface planaire (42, 48) du carré comme un évidement, qui est adapté aux dimensions du dispositif de coupe (30; 130) de manière à ce que le dispositif de coupe (30; 130) soit saillant dans son état reçu dans la griffe de serrage (34; 134) avec une zone de contact (30 - 2) butant contre la surface de support (40; 140) à une cote prédéfinie (D - T) de la griffe de serrage (34; 134).

4. Outil selon l'une quelconque des revendications 1 à 3, **caractérisé en ce que** la griffe de serrage (34; 134) est reçue dans un évidement (36) du corps de support (20), la surface de support (40) faisant partie de l'évidement (36).

5. Outil selon l'une quelconque des revendications 1 à 4, **caractérisé en ce que** l'angle d'incidence (THETA) s'élève sensiblement à 90°.

6. Outil selon l'une quelconque des revendications 1 à 5, **caractérisé en ce que** la griffe de serrage (34) bute sur une autre surface d'appui (42; 142) sur le corps de support (20; 120).

7. Outil selon l'une quelconque des revendications 4 à 6, **caractérisé en ce que** l'autre surface d'appui (42; 142) peut être mise en tension contre une surface de l'évidement (36) pour la griffe de serrage (34).

8. Outil selon l'une quelconque des revendications 1 à 7, **caractérisé en ce que** le dispositif de coupe (30) est formé par une plaque de coupe, en particulier une plaque de coupe réversible, qui s'appuie entièrement d'une part sur la surface de support (40) du corps de support (20) et d'autre part sur une surface de fond (46) de la poche (44) dans la griffe de serrage (34).

9. Outil selon la revendication 8, **caractérisé en ce que** l'évidement (44) dans la griffe de serrage (34) a des parois latérales (41) dégagées, sur lesquelles reposent des surfaces libres (30 - 4) du dispositive de coupe (30).

10. Outil selon l'une quelconque des revendications 3 à 9, **caractérisé en ce que** l'évidement (44) est conçu dans une zone d'angle dans la griffe de serrage (34).

11. Outil selon l'une quelconque des revendications 3 à 10, **caractérisé en ce que** la poche (44) est conçue dans une zone d'angle sur le côté opposé à la surface de support (40) sous la forme d'un fraisage avec une surface de fond (46) parallèle à la surface de support (40).

12. Outil selon l'une quelconque des revendications 3 à 11, **caractérisé en ce que** la griffe de serrage (34; 134) peut être déplacée et/ou inclinée au moyen d'un dispositif à boulon fileté (50, 52, 54; 150) dans un niveau parallèle à la surface de support (40).

13. Outil selon la revendication 12, **caractérisé en ce que** le dispositif à boulon fileté (50) traverse la griffe de serrage (34) sensiblement en son centre.

14. Outil selon la revendication 13, **caractérisé en ce que** le dispositif à boulon fileté (50) comporte un boulon meulé, avec lequel la griffe de serrage (34) s'appuie sur la surface de contact (22; 122) de l'évidement (36) du corps de support (20; 120).

15. Outil selon l'une quelconque des revendications 6 à 14, **caractérisé en ce que** l'autre surface d'appui (42; 142) de la griffe de serrage (34; 134) est conçue dans la zone de l'autre extrémité par rapport au dispositif de tension (50; 150) de la griffe de serrage (34; 134).

16. Outil selon la revendication 15, **caractérisé en ce que** l'autre surface d'appui (42; 142) est formée par une entretoise, qui reste par un fraisage libre (48) sur le côté inférieur de la griffe de serrage (34).

17. Outil selon l'une quelconque des revendications 7 à 16, **caractérisé en ce que** la griffe de serrage (34; 134) s'appuie sur le côté opposé au dispositive de coupe (30; 130) sur un corps de réglage (62; 162).

18. Outil selon la revendication 17, **caractérisé en ce que** le corps de réglage est formé par un corps à clavette (62), qui s'appuie entièrement sur une surface externe (64) conçue de manière correspondante de la griffe de serrage (34) et peut être déplacé au moyen d'un dispositif de réglage (60).

19. Outil selon l'une quelconque des revendications 1 à 18, **caractérisé en ce que** le dispositif de coupe (30; 130) est formé par une plaque de découpe réversible.

20. Outil selon l'une quelconque des revendications 1 à 18, **caractérisé en ce que** le dispositif de découpe (30; 130) a la forme d'une plaque polygonale, de préférence une plaque triangulaire ou carrée.

21. Outil selon l'une quelconque des revendications 1 à 20, **caractérisé par** la conception sous forme d'outil de post-usinage et d'alésage entraîné par rotation, dans lequel le au moins un dispositif de coupe (30; 130) sert à l'usinage précis d'une surface, qui se trouve dans une position relative tolérée par rapport à l'axe de rotation (A) de l'outil (15).

22. Outil selon la revendication 21, **caractérisé en ce que** l'évidement (36) du corps de support (20) est formé par un fraisage axial avec deux surfaces (40, 22) se trouvant dans un certain angle l'une par rapport à l'autre, l'une d'entre elles formant une surface de support (40) pour le dispositif de coupe (30).

23. Outil selon l'une quelconque des revendications 1 à 22, **caractérisé en ce que** le dispositif de coupe (30; 130) est composé d'un métal résistant à l'usure, comme par exemple de l'acier, de la céramique ou du cermet.
